(19) Europäisches Patentamt
European Patent Office
Office européen des brevets

(11) **EP 4 357 941 A1**

(12) **EUROPEAN PATENT APPLICATION**
published in accordance with Art. 153(4) EPC

(43) Date of publication:
**24.04.2024 Bulletin 2024/17**

(21) Application number: **22824249.1**

(22) Date of filing: **15.06.2022**

(51) International Patent Classification (IPC):
**G06F 16/9535** (2019.01)     **G06F 16/906** (2019.01)
**G06Q 50/18** (2012.01)

(86) International application number:
**PCT/CN2022/098945**

(87) International publication number:
**WO 2022/262774 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021   CN 202110679068
28.07.2021   CN 202110859623**

(71) Applicant: **Nozo Group Co., Ltd.
Shenzhen, Guangdong 518000 (CN)**

(72) Inventor: **MENG, Tianqing
Hong Kong Cooperation Zone Shenzhen,
Guangdong
518000 (CN)**

(74) Representative: **Ipey
Apex House
Thomas Street
Trethomas
Caerphilly CF83 8DP (GB)**

(54) **INFORMATION EXCHANGE METHOD, APPARATUS AND DEVICE, AND STORAGE MEDIUM**

(57)     The present disclosure provides a method for information interaction, including: establishing an attorney information base, attorney information including an attorney professional level; establishing a client information base including information of a plurality of clients, and information of each client includes historical application information; obtaining attorney demand information of a target client, and matching the attorney demand information and the historical application information corresponding to the target client with the attorney information in the attorney information base to generate an attorney list that is matched; and returning the attorney list to a client terminal. This method realizes rapid and accurate attorney recommendation for the client. In addition, an apparatus for information interaction, a device, and a storage medium are provided.

FIG. 5

Establish an attorney information base, where the attorney information base includes an attorney professional level — 502

Establish a client information base, where the client information base includes historical application information — 504

Obtain attorney demand information of a target client, and match the attorney demand information and historical application information corresponding to the target client with the attorney information in the attorney information base to generate an attorney list that is matched, where the attorney list includes information of a plurality of matched attorneys — 506

Return the attorney list to the client terminal — 508

Processed by Luminess, 75001 PARIS (FR)

## Description

## TECHNICAL FIELD

The present disclosure relates to the field of information processing technology, and in particular to a method and apparatus for information interaction, a device, and a storage medium.

## BACKGROUND

With vigorous development of science and technology, intellectual property is increasingly emphasized by enterprises, and patents, as an intangible asset, have become an important competitive resource for enterprises. Patent documents are a kind of professional legal documents, applicants often need to entrust a patent agency to file patent applications, and the patent documents are written by patent attorneys in the patent agency.

However, at present, there is a serious information asymmetry problem in the patent agency industry. If an applicant (i.e., a client) wants to know a professional level of a patent attorney, he can only know it through introductory information about the patent attorney provided by the agency. Such a channel to know the professional level of the patent attorney is not only inefficient, but also cannot guarantee that the information about the patent attorney provided by the agency is true and credible.

Even if accurate information about patent attorneys can be obtained, it is not only difficult but also inefficient for clients to select suitable patent attorneys in the face of a large amount of information about patent attorneys.

Therefore, there is an urgent need to come up with a method able to be rapidly and accurately to match the patent attorneys.

## SUMMARY

The present disclosure aims to solve the problem of inefficiency and difficulty in selecting an attorney and provides a method and apparatus for information interaction, device and storage medium, which are able to rapidly and accurately recommend patent attorneys for clients.

A method for information interaction applied at an information processing platform is provided, including: establishing an attorney information base, where the attorney information base includes information of a plurality of attorneys, and information of each of the plurality of attorneys includes an attorney professional level; establishing a client information base, where the client information base includes information of a plurality of clients, and information of each of the plurality of clients includes historical application information; obtaining attorney demand information of a target client, and matching the attorney demand information and the historical application information corresponding to the target client with the information of the plurality of attorneys in the attorney information base to generate an attorney list that is matched, where the attorney list includes information of a plurality of matched attorneys; and returning the attorney list to a client terminal.

An apparatus for information interaction applied at an information processing platform is provided, including: a first establishing module for establishing an attorney information base, where the attorney information base includes information of a plurality of attorneys, and information of each of the plurality of attorneys includes an attorney professional level; a second establishing module for establishing a client information base, where the client information base includes information of a plurality of clients, and information of each of the plurality of clients includes historical application information; an obtaining module for obtaining attorney demand information of a target client; a matching module for matching the attorney demand information and the historical application information corresponding to the target client with the information of the plurality of attorneys in the attorney information base to generate an attorney list that is matched, where the attorney list includes information of a plurality of matched attorneys; and a returning module for returning the attorney list to a client terminal.

A computer readable storage medium storing a computer program, where the computer program when executed by a processor causes the processor to perform the following operations: establishing an attorney information base, where the attorney information base includes information of a plurality of attorneys, and information of each of the plurality of attorneys includes an attorney professional level; establishing a client information base, where the client information base includes information of a plurality of clients, and information of each of the plurality of clients includes historical application information; obtaining attorney demand information of a target client, and matching the attorney demand information and the historical application information corresponding to the target client with the information of the plurality of attorneys in the attorney information base to generate an attorney list that is matched, where the attorney list includes information of a plurality of matched attorneys; and returning the attorney list to a client terminal.

A computer device including a memory and a processor, where the memory stores a computer program, and the computer program when executed by the processor causes the processor to perform the following operations: establishing an attorney information base, where the attorney information base includes information of a plurality of attorneys, and information of each of the plurality of attorneys includes an attorney professional level; establishing a client information base, where the client information base includes information of a plurality of clients, and information of each of the plurality of clients includes historical application information; obtaining attorney demand information of a target client, and matching the attorney demand information and the historical application information corresponding to the target client with the information of the plurality of attorneys in the attorney information base to generate an attorney list that is matched, where the attorney list includes information of a plurality of matched attorneys; and returning the attorney list to a client terminal.

In the above method and apparatus information interaction, device and storage medium, the attorney information base and the client information base are established in the information processing platform in advance, so that when the client needs to be recommended with an agent, the client is able to directly obtain the historical application information from the client information database after obtaining the attorney demand information. Then the attorney demand information and the historical application information are matched with the attorney information in the attorney information base to generate the list of the matched attorneys, and then the list of the matched attorneys is returned to the client terminal as the recommendation result. This information interaction method realizes rapid and accurate recommendation of matched patent attorneys for the clients due to the pre-establishment of the attorney information base and the client information base.

## BRIEF DESCRIPTION OF THE DRAWINGS

In order to more clearly illustrate the technical solutions in the embodiments of the present disclosure or the existing technology, the accompanying drawings to be used in the description of the embodiments or prior art will be briefly introduced below. It is apparent that the accompanying drawings in the following description are only some of the embodiments of the present disclosure. For a person of ordinary skill in the art, other figures can be obtained based on the accompanying drawings without creative efforts.

FIG. 1 is a flow chart of a method for processing information based on data interaction in an embodiment.
FIG. 2 is a flow chart of a method for determining professional levels of attorneys in an embodiment.
FIG. 3 is a flow chart of a method for information recommendation based on data interaction in an embodiment.
FIG. 4 is a flow chart of a method for calculating a degree of match with each candidate attorney in an embodiment.
FIG. 5 is a flow chart of the information interaction method in an embodiment.
FIG. 6 is a time sequence diagram of an information interaction process in an embodiment.
FIG. 7 is a structural block diagram of an apparatus for processing information based on data interaction in an embodiment.
FIG. 8 is a structural block diagram of an apparatus for information recommendation based on data interaction in an embodiment.
FIG. 9 is a structural block diagram of an information interaction apparatus in an embodiment.
FIG. 10 is a block diagram of an internal structure of a computer device in an embodiment.

## DETAILED DESCRIPTION

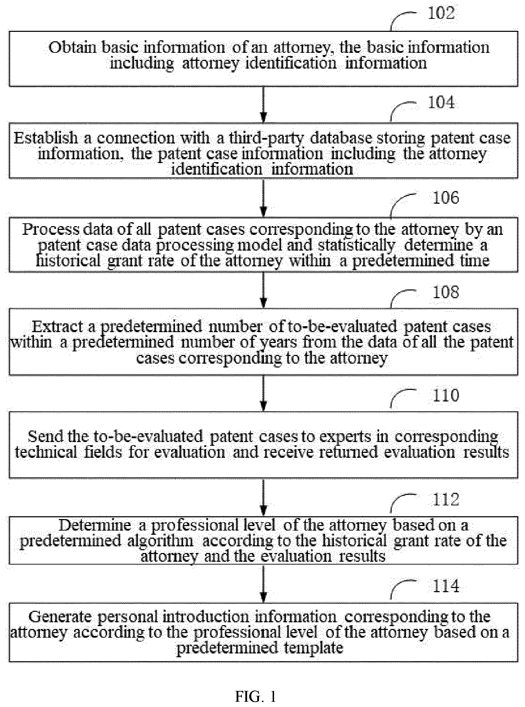

It should be understood that specific embodiments described herein are only for explaining the present disclosure and are not intended to limit the present disclosure.
The technical solutions in the embodiments of the present disclosure will be described clearly and completely in the following in conjunction with the accompanying drawings in the embodiments of the present disclosure. It is apparent that the embodiments described are only some of and not all the embodiments of the present disclosure. Based on the embodiments in the present disclosure, all other embodiments obtained by a person of ordinary skill in the art without creative efforts fall within the protection scope of the present disclosure.
It should be noted that terms 'including', 'comprising' and 'having' and any variations thereof in the specification, claims, and the accompanying drawings of the present disclosure are intended to cover non-exclusive inclusion. For example, a process, method, system, product or apparatus including a series of steps or units is not limited to the listed steps or units, but optionally also includes or units that are not listed, or optionally includes other steps or units that are inherent to the process, method, product or apparatus. In the claims, specification, and accompanying drawings of the present disclosure, terms such as 'first' and 'second' and other relational terms are used only to distinguish one entity/operation/object from another, and do not necessarily require or imply any such actual relationship or order between these entities/operations/objects.
Reference to 'embodiment' herein implies that particular features, structures, or characteristics described in connection with the embodiments may be included in at least one embodiment of the present disclosure. The presence of the phrase at various points in the specification does not necessarily refer to the same embodiment, nor is it a separate or alternative embodiment that is mutually exclusive of other embodiments. It is understood by those skilled in the art, both explicitly and implicitly, that the embodiments described herein can be combined with other embodiments.
As shown in FIG. 1, in order to realize a real presentation of personal introduction information of patent attorneys, a method for processing information based on data interaction is provided, which is applied at an information processing platform and includes the following steps.

Step 102, obtaining basic information of an attorney, the basic information including attorney identification information.

The attorney here refers to a person engaged in patent agency work, also known as a 'patent agent' or a 'patent attorney'. The basic information of the attorney includes the attorney identification information, and the attorney identification information is applicable to determining information of the attorney's identity. In one embodiment, a name of the attorney is able to be directly adopted as the information of the attorney's identity, and an attorney qualification certificate number of the attorney is also able to be adopted as the attorney identification information. In one embodiment, the name and practice experience of the attorney are adopted as the attorney identification information in order to more accurately determine the attorney identification information, and the practice experience includes at least one agency name corresponding to the attorney during various practice periods. In addition, the basic information of the attorney may include, in addition to the attorney identification information, other personal information, such as gender information, academic information, major information, attorney qualification certificate information, attorney practice certificate information, attorney practice years, and professional representing direction, etc. The practice experience includes when and in which agency the attorney practiced. For example, an attorney called Li San, practiced in an agency A from January 2012 to July 2018 and in an agency B from August 2018 to April 2021. At present, the professional representing direction of the attorney in the industry is mainly classified into four professional representing directions, i.e., software communication, electronics, machinery, and biochemistry.

There may be various ways to obtain the basic information of the attorney. In one embodiment, the basic information of the attorney is obtained directly from registration information of the attorney. The attorney is required to register in the information processing platform with a real name, and personal information related to the attorney is required to fill in during the registration. In one embodiment, the basic information of the attorney is captured by interacting with a third-party platform, for example, the practice experience of the attorney is able to be found from 'China National Attorney Association Website', and the academic information and major information of the attorney are able to be found from the 'Credit Information Website'.

Step 104, establishing a connection with a third-party database storing patent case information, the patent case information including the attorney identification information.

The third-party database refers to a database in which the patent case information is stored. The third-party database may be a patent search library of China National Intellectual Property Administration, or other patent search libraries, such as PatSnap, Baiteng, incopat, etc. For cases filed by an agency, the patent case information includes the attorney identification information, for example, information of each patent case contains the agency name and the attorney name.

Step 106, processing data of all patent cases corresponding to the attorney using an established patent case data processing model, and statistically determining a historical grant rate of the attorney within a predetermined time.

The patent case data processing model is configured to batch process the data of all the patent cases corresponding to the attorney, and a legal status of each patent case can be extracted by the patent case data processing model. The legal status includes four statuses, i.e., grant, refusal, pending, and withdrawal. Withdrawal is categorized into active withdrawal and deemed withdrawal. The predetermined time can be customized, for example, the time since the attorney has been practicing is taken as the predetermined time, or the last five years are taken as the predetermined time.

In one embodiment, the historical grant rate is calculated by calculating a ratio of the number of granted cases to the number of closed cases. The closed cases include granted cases, refused cases, and withdrawn cases. For example, if the number of granted cases is 120 and the number of closed cases is 200, then the calculated historical grant rate is 60% (120/200=60%).

In one embodiment, the calculation of the grant rate is based on statistical calculation of invention patent cases only. Since utility model and appearance patents do not involve substantive examination, the grant rate of utility model and appearance patents cannot accurately reflect a professional level of the attorney. Specifically, the patent case data processing model first extracts invention patents by types of the cases, then extracts a legal status of each invention patent and calculates the historical grant rate of the attorney based on the legal status of each invention patent. The statistics of the grant rate based on the invention patents is conducive to accurately evaluating the professional level of the attorney.

In one embodiment, in order to better reflect a current professional level of the attorney, a predetermined number of closed cases (e.g., 100 cases) closest to a current time are selected, and a historical grant rate that best reflects the current professional level of the attorney is calculated based on the number of granted cases, the number of refused cases, and the number of withdrawn cases in the closed cases.

Step 108, extracting a predetermined number of to-be-evaluated patent cases within a predetermined number of years from the data of all the patent cases corresponding to the attorney.

The to-be-evaluated patent cases are cases randomly extracted for evaluation of a writing quality of the attorney by experts. Since the professional level of the attorney generally improves gradually with the accumulation of experience, a predetermined number of patent cases (e.g., 3) are extracted from the data of patent cases within a predetermined number of years (e.g., the last three years) as the to-be-evaluated patent cases in order to truly reflect the current professional level of the attorney, which is conducive to accurately evaluating the current professional level of the attorney.

Step 110, sending the to-be-evaluated patent cases to experts in corresponding technical fields for evaluation and receiving returned evaluation results.

In order to more accurately evaluate the writing quality of the attorney, it is required to send the to-be-evaluated patent cases to the experts in a corresponding technical field for evaluation, and receive the returned evaluation results. The evaluation results may be scores or grades. When there are multiple to-be-evaluated patent cases, it is required to synthesize the evaluation results corresponding to multiple to-be-evaluated patent cases. For example, when there are three to-be-evaluated patent cases, an average score of the three to-be-evaluated patent cases is taken.

In one embodiment, in order to accurately match the evaluation experts, it is required to perform a technical analysis of the to-be-evaluated patent cases to determine technical fields to which the to-be-evaluated patent cases belong, and then send the to-be-evaluated patent cases to the experts corresponding to the technical fields for evaluation. The classification of the technical fields is based on specific technologies. Specifically, the determination of the technical fields is based on technical classification numbers, and different technical classification numbers themselves represent the technical fields to which they belong. For example, G01 represents the field of measurement and testing. G02 represents the field of optics. In one embodiment, the technical field is determined based on both the technical classification number and the technical keyword, and the combination of the technical classification number and the technical keyword is able to obtain a more subdivided technical field. For example, if the technical classification number indicates program control and the technical keyword is temperature control, then the technical field is determined as temperature control using software.

Step 112, determining a professional level of the attorney based on a predetermined algorithm according to the historical grant rate of the attorney and the evaluation results.

The historical grant rate of the attorney accurately reflects the professional level, and the evaluation results accurately reflect the writing quality of the cases, and a combined result of the two accurately achieves professional grading of the attorney. In one embodiment, the historical grant rate and the evaluation results are synthesized by means of weighted summation.

In one embodiment, a number of practice years and a total number of historical case applications of the attorney are obtained, and the number of practice years and the total number of historical case applications are used as inputs to a weight determination model, and the weight determination model is obtained by using a deep neural network model for training and learning. A first weight of the historical grant rate and a second weight of the evaluation results corresponding to the attorney that are output from the weight determination model are obtained, and the professional level of the attorney is determined based on the historical grant rate, the first weight, the evaluation results, and the second weight.

In one embodiment, historical service evaluation information corresponding to the attorney is also obtained.

The historical service evaluation information refers to evaluation information of clients historically served by the attorney on the professionalism and service of the attorney, and the historical service evaluation information may specifically be scores or grades, for example, the grades may be categorized as very satisfied, satisfied, average, or unsatisfied. The historical service evaluation information of the attorney truly reflects the service quality of the attorney, which includes service attitude and professional recognition. Then the professional level of the attorney is determined according to the historical grant rate, evaluation results and historical evaluation information of the attorney in accordance with the predetermined algorithm. That is, the levels are classified according to a combined result of the historical grant rate, evaluation results and historical evaluation information. This method is able to more accurately realize the professional grading of the attorney.

It should be noted that for attorneys who have not yet processed a case in the information processing platform, there is no historical service evaluation information yet, i.e., the historical service evaluation information obtained may be empty. When the historical service evaluation information is empty, the historical evaluation information is set to a default value, or a weight of the historical service evaluation information is set to 0 and weights of the evaluation results and historical evaluation information are increased. In one embodiment, the grade division of the professional level is customized according to the need, for example, the professional level is divided into five grades, i.e., AAA, AA+, AA, AA-, and A. Of course, six grades are also able to be set. Furthermore, a form of expression of the grades is also able to be customized, for example, the form of expression of lighting up different numbers of stars.

Step 114, generating personal introduction information corresponding to the attorney according to the professional level of the attorney based on a predetermined template.

The personal introduction information of the attorney includes the professional level of the attorney, so that the professional level of the attorney can be more intuitively reflected. In addition, in order to more comprehensively demonstrate the professional level of the attorney, the generated personal introduction information of the patent attorney includes not only the professional level capable of reflecting the professional level of the attorney, but also main applicants historically represented by the attorney and main technical fields historically represented by the attorney. Of course, other information is also included, for example, the professional representing direction of the attorney. At present, the professional representing direction in the industry is mainly classified into four professional representing directions of software communication, electronics, machinery and biochemistry. Of course, the professional representing direction is also able to be adjusted according to the change of actual situations, for example, to be further refined.

In one embodiment, the main applicants historically represented by the attorney and the main technical fields historically represented by the attorney are obtained by the following ways. That is, the data of all the patent cases corresponding to the attorney is analyzed and processed to statistically obtain the applicants historically represented by the attorney and the technical fields historically represented by the attorney.

When the applicants and technical fields historically represented by the attorney have a large quantity, the main applicants and main technical fields are able to be selected from them. The number of cases of each applicant historically represented by the attorney is sorted from the most to the least, and a top-ranked predetermined number of the applicants are selected as the main applicants. For example, 10 patents of company A, 20 patents of company B, 34 patents of company C, 5 patents of company D, 12 patents of company E have been historically represented, and the applicants are sorted according to the number of patent cases, which are company C, company B, company E, company A and company D, respectively. After that, top three applicants are selected as the main applicants, which are company C, company B and company E, respectively. The number of cases in each technical field that has been historically represented is sorted, and a top-ranked predetermined number (e.g., top three) of technical fields are selected as the main technical fields. The selection of main applicants and main technical fields is conducive to subsequent more focused display of the attorney information.

In one embodiment, the above method includes sending the generated personal introduction information to the terminal for display. That is, the personal introduction information of the attorney is able to be viewed by the terminal after logging into the information processing platform. The problem that the personal introduction information of the attorney cannot be accurately and quickly obtained in the industry is solved.

In the method and apparatus for processing information based on data interaction, device and storage medium described above, the data of all the patent cases of the attorney is obtained first through interaction with the third-party database according to the basic information of the attorney, the data of all the patent cases corresponding to the attorney is then analyzed to statistically determine the historical grant rate of the attorney, and further, the predetermined number of to-be-evaluated patent cases in the predetermined number of years are selected randomly, the to-be-evaluated patent cases are sent to the experts in the corresponding technical fields for evaluation, the evaluation results are received, and finally, the professional level of the attorney is calculated based on the attorney's historical grant rate and evaluation results.

In this method, real data of patent cases historically represented by the attorney is captured based on the interaction with the third-party database, and the real historical grant rate of the attorney is obtained based on the real data of the patent cases. Through the extraction of the real patent cases for expert evaluation, the real evaluation results are obtained. Finally, the professional level of the attorney is determined by integrating the attorney's historical grant rate and evaluation results, and the professional level is determined to be real and credible. In addition, the personal introduction information of the attorney is generated according to the professional level of the attorney in accordance with the predetermined template, and the generated personal introduction information of the attorney is not only real and credible, but also comprehensive, so that the applicants are able to comprehensively and accurately understand the professional level of the attorney according to the personal introduction information of the attorney. Furthermore, the attorney's personal introduction information is open to the public, so the applicants are able to quickly access it on the terminal, and the applicants are able to view the personal introduction information of all patent attorneys, which is not limited to viewing the patent attorneys of a certain agency only.

In one embodiment, the attorney identification information includes an attorney name and an practice experience, and the practice experience includes at least one agency name corresponding to the attorney during practice periods. Before processing the data of all the patent cases corresponding to the attorney by using the established patent case data processing model, the method further includes extracting, based on the attorney name and the practice experience, the data of all the patent cases corresponding to the attorney from the third-party database.

Since the attorneys are likely to have the same first name and last name, the extraction of the patent case data based only on the attorney's name is likely to be inaccurate. Therefore, in order to guarantee the extraction of accurate patent case data, this embodiment proposes to extract the data of all the patent cases corresponding to the attorney from the third-party database based on the name and practice experience of the attorney at the same time. Specifically, the practice experience of the attorney includes when and in which agency the attorney practiced, so it is required to limit an extraction condition according to the practice experience of the attorney, and extract the data of all the patent cases corresponding to the attorney from the third-party database with 'name plus time period plus agency' as the extraction condition.

In one embodiment, the basic information includes a professional representing direction, and the extracting the predetermined number of to-be-evaluated patent cases within the predetermined number of years from the data of all the patent cases corresponding to the attorney includes screening out data of candidate patent cases matching the professional representing direction from the data of all the patent cases corresponding to the attorney and extracting the to-be-evaluated patent cases from the data of the candidate patent cases.

The professional representing direction refers to the representing direction where the attorney is good at, which is mainly classified into four professional representing directions: software communication, electronics, machinery and biochemistry (biology and chemistry). In order to more accurately reflect the professional level of the attorney in his/her professional representing direction, patent cases matching his/her professional representing direction are extracted when extracting the to-be-evaluated patent cases. First, the data of candidate patent cases matching the professional representing direction are screened out, and then several to-be-evaluated patent cases are randomly selected from the candidate patent cases. By matching with the professional representing direction, the to-be-evaluated patent cases that more closely reflect the professional level of the attorney are selected, thereby facilitating the subsequent obtaining of more accurate evaluation results.

In one embodiment, the processing the data of all the patent cases corresponding to the attorney using the established patent case data processing model and statistically determining the historical grant rate of the attorney includes: extracting a legal status from the data of all the patent cases using the established patent case data processing model, where the legal status includes one of grant, refusal, pending, and withdrawal, and the patent case data processing model is configured to determine a regular expression corresponding to the legal status and extract the legal status of each case based on the regular expression; counting a number of granted cases whose legal statuses are grant, a number of refused cases whose legal statuses are refusal, and a number of withdrawn cases whose legal statuses are withdrawal; and calculating the historical grant rate based on the number of granted cases, the number of refused cases, and the number of withdrawn cases.

The patent case data processing model uses the regular expression in extracting the legal status of the case, and the regular expression is a pattern describing string matching. The legal status is extracted from each case by determining the regular expression corresponding to the legal status, and the historical grant rate is calculated based on the number of granted cases, the number of refused cases, and the number of withdrawn cases the number of granted cases, i.e., the historical grant rate = the number of granted cases/(the number of granted cases + the number of refused cases + the number of withdrawn cases).

In one embodiment, the counting the number of granted cases whose legal statuses are grant, the number of refused cases whose legal statuses are refusal, and the number of withdrawn cases whose legal statuses are withdrawal includes: counting a number of granted cases, a number of refused cases, and a number of withdrawn cases in a predetermined number of closed cases nearest to a current time, and the calculating the historical grant rate based on the number of granted cases, the number of refused cases, and the number of withdrawn cases includes: calculating a latest the historical grant rate based on the number of granted cases, the number of refused cases, and the number of withdrawn cases in the predetermined number of closed cases nearest to the current time.

The closed cases include granted cases, refused cases and withdrawn cases. In order to better reflect a current professional level of the attorney, a grant rate of cases in the predetermined number of closed cases (e.g., 100) closest to the current time is obtained as the historical grant rate. This historical grant rate is dynamically calculated, and the historical grant rate is continuously updated as time passes, so that the professional level of the attorney is able to be reflected in time.

In one embodiment, the counting the number of granted cases whose legal statuses are grant, the number of refused cases whose legal statuses are refusal, and the number of withdrawn cases whose legal statuses are withdrawal includes: screening out candidate patent cases whose filing dates are within a predetermined time period; and counting the number of granted cases whose legal statuses are grant, the number of refused cases whose legal statuses are refusal, and the number of withdrawn cases whose legal statuses are withdrawal. The calculating the historical grant rate based on the number of granted cases, the number of refused cases, and the number of withdrawn cases includes: calculating a historical grant rate corresponding to the predetermined time period based on the number of granted cases whose legal statuses are grant, the number of refused cases whose legal statuses are refusal, and the number of withdrawn cases whose legal statuses are withdrawal in the candidate patent cases.

In order to more accurately reflect the current professional level of the attorney, a grant rate of the cases within the predetermined time period is counted when calculating the historical grant rate. The predetermined time period refers to a time period when the filing date is in a specific year. Since a cycle of patent examination is relatively long and generally takes more than one year, or even three years, cases whose filing dates are in the last three years are screened out, and then situations of the candidate patent cases with the filing dates in the last three years are statistically counted, the situations including the number of granted cases, the number of refused cases and the number of withdrawn cases, so as to reflect the professional level of the attorney in the last three years, and the grant rate calculated in this way is closer to the current professional level of the attorney.

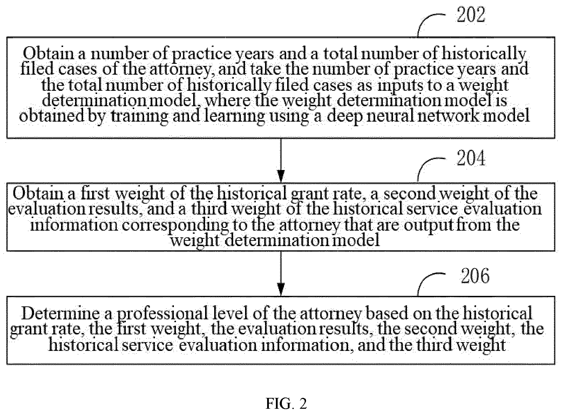

As shown in FIG. 2, in one embodiment, the determining the professional level of the attorney based on the predetermined algorithm according to the historical grant rate, the evaluation results, and the historical service evaluation information of the attorney includes the following steps.

Step 202, obtaining a number of practice years and a total number of historically filed cases of the attorney, and taking the number of practice years and the total number of historically filed cases as inputs to a weight determination model, where the weight determination model is obtained by training and learning using a deep neural network model.

In order to more accurately reflect the real professional level of the attorney, it is required to adjust the weights of the above three of the historical grant rate, the evaluation results and the historical service evaluation information according to the number of practice years and the total number of historically filed cases of the attorney. The specific adjustment is made according to the weight determination model obtained from training.

The weight determination model is obtained based on the deep neural network model for training and learning, and a supervised training method is used to train the weight determination model. Training data needs to be constructed, the training data including the number of practice years and the total number of historically filed cases of the attorney, then corresponding manually labeled weights are used as labels for training, and weight determination parameters in the model are continuously adjusted using a gradient descent method based on a loss function until the model reaches convergence conditions.

Step 204, obtaining a first weight of the historical grant rate, a second weight of the evaluation results, and a third weight of the historical service evaluation information corresponding to the attorney that are output from the weight determination model.

The first weight, the second weight, and the third weight output by the weight determination model are obtained, the first weight reflects a degree of influence of the historical grant rate on the professional level of the attorney, the second weight reflects a degree of influence of the evaluation results on the professional level of the attorney, and the third weight reflects a degree of influence of the historical evaluation information on the professional level of the attorney. Generally speaking, for attorneys with shorter years of practice, the weight of the evaluation results is relatively larger, and the weights of the historical grant rate and historical service evaluation information are smaller due to the long cycle of the patent examination. The historical grant rates of attorneys with shorter years of practice are often not high, or there is no relevant data. And similarly, the corresponding historical service evaluation information is also less, so it is not very meaningful for reference. As the number of years of practice grows and the total number of cases represented by the attorney increases, the weights of the historical grant rate and the historical service evaluation information relatively increase.

Step 206, determining a professional level of the attorney based on the historical grant rate, the first weight, the evaluation results, the second weight, the historical service evaluation information, and the third weight.

After determining the first weight corresponding to the historical grant rate, the second weight corresponding to the evaluation results, and the third weight corresponding to the historical service evaluation information, the professional level of the attorney is determined by weighted summation. Specifically, in the specific calculation, the historical grant rate, the evaluation results, and the historical service evaluation information are able to be converted into scores, and the professional level of the attorney is determined based on a composite score after obtaining the composite score from the calculation. For example, there are five grades. The weights of the historical grant rate, the evaluation results and the historical service evaluation information are output by using the weight determination model, and then the professional level of the attorney is calculated by means of weighted summation, so as to more realistically reflect the professional level of the attorney.

In one embodiment, the extracting the data of all the patent cases corresponding to the attorney from the third-party database based on the attorney name and the practice experience includes: determining a target search condition based on the attorney name and the practice experience, where the target search condition includes the attorney name, a name of an agency for practice, and a practice time corresponding to the agency; and extracting the data of all the patent cases corresponding to the attorney from the third-party database based on the target search condition.

In order to more accurately capture the data of all the patent cases corresponding to the attorney, the accurate target search condition is needed, which needs to include the attorney name, the name of the agency for practice and the practice time corresponding to the agency at the same time. By setting the target search condition, interference caused by the same name is excluded as far as possible. Thus, it is more conducive to accurately obtaining the data of all the patent cases corresponding to the attorney.

In one embodiment, the performing the technical analysis of the to-be-evaluated patent cases and determining the technical fields to which the to-be-evaluated patent cases belong includes: obtaining technical classification numbers and field keywords corresponding to the to-be-evaluated patent cases; and determining the technical fields to which to-be-evaluated patent cases belong according to the technical classification numbers and the field keywords.

The field keyword indicates a field in which the technology is applied, the technical classification number is used to determine the technical classification, and a specific technical field is able to be determined based on the technical classification number and the field keyword. For example, if temperature control technology is determined based on the technical classification number, and the field keyword is electronic cigarette, then it is determined that the to-be-evaluated patent case belongs to the temperature control of the electronic cigarette.

In one embodiment, the analyzing and processing the data of all patent cases corresponding to the attorney to statistically obtain the applicants historically represented by the attorney and the technical fields historically represented by the attorney includes: capturing classification number information and abstract information of each patent case, and analyzing the abstract information to extract a technical keyword; and using the classification number information and the technical keyword as inputs to a technical field classification model to determine a technical field category corresponding to the patent case, and using the technical field category as a technical field label of the patent case.

The classification number information is able to be specific to groups, for example, G06K9/00. The abstract information refers to the content of the abstract in the patent document. The abstract information is analyzed to extract the technical keyword, and the technical keyword is extracted by semantic-based extraction, i.e., the technical keyword is extracted by semantic analysis of the abstract information. The technical field classification model is then used to determine the technical field category corresponding to the patent case, and the technical field category is stored as the technical label of the patent case, thereby not only facilitating the applicant to view the information of the technical fields historical represented by the attorney, but also facilitating subsequent matching recommendation of the technical fields of patents.

In one embodiment, the technical field classification model includes: a first feature model, a second feature model, and a classification model. The first feature model is configured to determine a first feature vector corresponding to a classification number based on the classification number, a second feature model is configured to determine a second feature vector corresponding to the technical keyword, and the classification model is configured to determine the technical field category corresponding to the patent case based on the first feature vector and the second feature vector.

The first feature model is configured to convert the classification number into the first feature vector, the second feature model is configured to convert the technical keyword into the second feature vector, and the first feature vector and the second feature vector are combined. The combined feature vector is used as an input to the classification model, and the classification model is configured to classify the patent cases with respect to the technical field category based on the information contained in the first feature vector and the second feature vector.

Constructing a training set is the most important part of model training, and a conventional construction of the training set often requires a lot of manpower and material resources for the labeling of the training data. In order to improve efficiency of the labeling, a method of rapid labeling of the data is proposed. Patent cases corresponding to the technical classification number and the technical keyword is searched for in the third-party database according to the technical classification number and the technical keyword, and the searched patent cases are uniformly labeled as a technical field category corresponding to the technical classification number and the technical keyword, so that not only the training data is quickly obtained, but also the rapid labeling of the training data is realized.

In one embodiment, the basic information further includes an attorney qualification certificate number, and after obtaining the basic information of the attorney, the method further includes: obtaining an official practice experience of the attorney based on the attorney qualification certificate number; verifying the basic information of the attorney based on the official practice experience; establishing the connection with the third-party database in response to successful verification; and returning a result of unsuccessful verification in response to the unsuccessful verification.

In order to ensure that the obtained basic information of the attorney is accurate, it is also necessary to verify the obtained information after obtaining the basic information, and the verification is carried out in the following manner, i.e., searching for the official practice experience of the attorney according to the qualification certificate number of the attorney, and then verifying the basic information of the attorney according to the official practice experience. Specifically, the official practice experience of the attorney is able to be obtained by interacting with the 'China National Attorney Association Website'. The information is then compared with the practice experience filled in the registration information to determine whether the filled information is accurate.

In one embodiment, the analyzing and processing the data of all patent cases corresponding to the attorney to statistically obtain the applicants historically represented by the attorney and the technical fields historically represented by the attorney includes: extracting applicant information in each case to count a number of cases corresponding to the same applicant information; determining main applicants according to the number of cases corresponding to each applicant information, where the main applicants have top-ranked number of cases; obtaining the technical classification number and the technical keyword of each case to determine a technical field corresponding to each case according to the technical classification number and the technical keyword; and counting a number of cases corresponding to the same technical field to determine main technical fields based on the number of cases corresponding to the same technical field.

In order to show the relevant information of the attorney in more detail, the main applicants as well as the main technical fields previously represented by the attorney are counted. The main applicants are the main clients historically served, and the main technical fields are the main technical fields historically served. For example, clients mainly serviced by an attorney Li San are company A, company B, company C, company D, etc., and the main technical fields are field I, field II, field III, etc. This is convenient for subsequent clients to have a more accurate understanding of the attorney according to the personal introduction information of the attorney, so as to select the most suitable attorney for themselves.

When faced with a large number of patent attorney information, how to quickly select a suitable attorney for the client is also a difficult problem. If browsing through the personal introduction information of each patent attorney one by one, it is undoubtedly time-consuming and labor-intensive, and for non-professionals, the selected attorney may not be the most suitable. Based on this, a method for information recommendation based on data interaction is provided, which is able to quickly and accurately match patent attorneys, and the method is widely applicable.

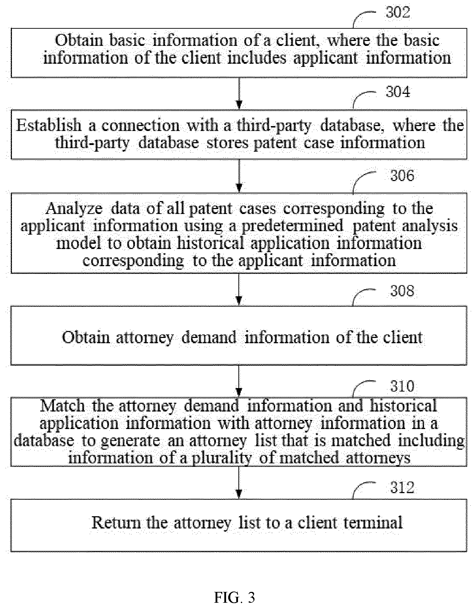

As shown in FIG. 3, a method for information recommendation based on data interaction is provided, applied at an information processing platform, including the following steps.

Step 302, obtaining basic information of a client, where the basic information of the client includes applicant information.

The applicant information may be a personal name or an enterprise name. For an enterprise client, the applicant information is a full name of the enterprise. A client account is able to be associated with information of one or more applicants. In addition, the basic information of the client includes enterprise qualification information, legal person information of the enterprise, and the like.

Step 304, establishing a connection with a third-party database, where the third-party database stores patent case information.

The third-party database is a database in which the patent case information is stored. The third-party database may be a patent search library of China National Intellectual Property Administration, or other patent search libraries, such as PatSnap, Baiteng, incopat, etc. For cases filed by an agency, the patent case information includes the applicant information.

Step 306, analyzing data of all patent cases corresponding to the applicant information using a predetermined patent analysis model to obtain historical application information corresponding to the applicant information.

The patent analysis model is configured to analyze the captured data of all the patent cases to obtain the historical application information of the applicant. The historical application information includes at least one of technical fields of historically filed patent cases, historically cooperating agencies, and historically cooperating attorneys. Specifically, the technical field of the patent case is able to be analyzed by the classification number, and then information such as the historical cooperating agency and attorney is able to be extracted from the data of the patent cases. By obtaining the data of the historically filed patent cases of the applicant, it is conducive to analyze and obtain actual demands of the client. In one embodiment, the technical field is determined by the classification number and the technical keyword extracted from the abstract information.

Step 308, obtaining attorney demand information of the client.

The attorney demand information refers to the information of the client's demand for the attorney. The attorney demand information includes, but is not limited to, one or more of a field demand, a level demand, a major demand, an agency demand, a time limit demand, a location demand, and the like. The field demand refers to the requirement for the professional representing direction of the attorney, which is classified into four directions, i.e., software communication, electronics, machinery and biochemistry. The level demand refers to a requirement for a level of the attorney, the higher the level of the attorney, the better writing quality of the attorney, and of course, a corresponding agency fee is higher. The major demand refers to a requirement for a major of the attorney. For example, for clients in the field of light-emitting diode (LED), it is often required that the attorney understands the knowledge related to LED, so it gives preference to the attorney in the field of photoelectricity. The agency demand reflects the client's trust in an agency, if the client is happy to cooperate with an agency before, it gives preference to attorneys under this agency for cooperation. The time limit demand refers to the time limit for the attorney to return the drafted application document. For example, for urgent cases, the client requires to return the drafted application document in a short period of time. The location demand refers to a requirement for a location of the attorney. For example, some clients want to communicate with the attorney in person, they may give preference to the attorney who is closer to them.

Step 310, matching the attorney demand information and the historical application information with attorney information in a database to generate an attorney list that is matched, where the attorney list includes information of a plurality of attorneys that are matched.

The attorney demand information and the historical application information are synthesized, and then matched with the attorney information in the database to generate the attorney list, and the attorneys are sorted in the attorney list according to the matching degree from high to low, so as to facilitate subsequent selection of the clients. The attorney here refers to a person engaged in patent agency work, also known as a 'patent agent' or 'patent attorney'.

In one embodiment, the attorneys in the attorney list are also able to be sorted by multiple dimensions, such as a major dimension, i.e., the highest major matching degree, a level dimension, i.e., the highest-level matching degree, and a composite dimension, i.e., a ranking of dimension combining a number of indicators. The clients are able to select the sorting dimension based on bias, which is conducive to providing clients with more flexible choices.

In one embodiment, it is also required to obtain the historical evaluation information corresponding to the client, match the attorney demand information, the historical application information, and the historical evaluation information with the attorneys in the database to generate the attorney list. The historical evaluation information refers to evaluation information of the client on the attorneys historically representing the client. The historical evaluation information reflects a degree of recognition of the client for the attorney historically representing the client. If the degree of recognition is high, then the attorney is recommended in priority subsequently, and if the degree of recognition is low, then the attorney is not recommended subsequently.

Step 312, returning the attorney list to a client terminal.

The attorney list is returned to the client terminal, and the client makes a selection based on the attorney list, which greatly improves the accuracy of the selection.

In the above method and apparatus for information recommendation based on data interaction, device and storage medium, the client information (applicant information) is obtained first, the connection is established with the third-party database, the data of all the patent cases corresponding to the applicant information is analyzed to extract the historical application information, the attorney demand information of the client is obtained, attorney information matching is performed based on the historical application information and attorney demand information to generate a list of matched attorneys, and then the generated attorney list is returned to the client terminal. The method for information recommendation based on data interaction realizes the accurate recommendation of attorneys for clients by matching information from various aspects. In addition, this recommendation method is not limited to the recommendation within an agency, but is applicable to the recommendation of all attorneys, which is widely applicable.

In one embodiment, the historical application information includes technical field of historically filed patent cases, historically cooperating agencies, and historically cooperating attorneys, and before analyzing the data of all the patent cases corresponding to the applicant information using the predetermined patent analysis model to obtain the historical application information corresponding to the applicant information, the method further includes: capturing the data of all the patent cases corresponding to the applicant information from the third-party database based on the applicant information .

The applicant information is used as a search condition to capture the data of all the patent cases corresponding to the applicant from the third-party database, thereby ensuring that the captured data of the patent cases is accurate.

In one embodiment, the historical application information includes technical field of historically filed patent cases, historically cooperating agencies, and historically cooperating attorneys, and the analyzing the data of all the patent cases corresponding to the applicant information using the predetermined patent analysis model to obtain the historical application information corresponding to the applicant information includes: extracting a technical classification number, a technical keyword, a name of an agency and an attorney corresponding to each of the patent cases using the predetermined patent analysis model; performing a similarity calculation based on the field demand and field information corresponding to the candidate attorneys to obtain a field matching degree corresponding to the field demand; performing a similarity calculation based on the major demand and major information corresponding to the candidate attorneys to obtain a major matching degree corresponding to the major demand; matching the level demand with level information corresponding to the candidate attorneys to obtain a level matching degree corresponding to the level demand; matching the time limit demand and time information corresponding to the candidate attorneys to obtain a time limit matching degree corresponding to the time limit demand; and extracting the attorney corresponding to each of the patent cases, counting a second number of cases represented by each attorney, and sorting the historically cooperating attorneys according to the second number of cases.

The patent analysis model is configured to extract the technical classification number, technical keyword, agency name and attorney of each patent case. The technical field is used to determine the field to which the client's technology belongs, for example, whether it belongs to the field of electronic cigarettes, or the field of smart home, and so on. Then the agency information is used to obtain the agency that the client prefers to cooperate with. The attorney information is used to obtain the attorney that the client prefers to cooperate with.

In one embodiment, the attorney demand information includes at least one of a field demand, a level demand, a major demand, and an agency demand, and the attorney information includes level information, field information, major information, and agency information.

The matching the attorney demand information, the historical evaluation information and the historical application information with the attorney information in the database to generate the attorney list that is matched includes: screening out candidate attorneys matching the attorney demand information from the attorney information based on the attorney demand information; calculating a matching degree of each of the candidate attorneys based on the attorney demand information, the historical evaluation information and the historical application information; and generating the attorney list based on the matching degree, where the information of the plurality of attorneys in the attorney list is arranged in order of the matching degree.

The fields may be classified according to the actual situation. In one embodiment, the fields may be classified into four fields, i.e., software communication, electronics, machinery and biochemistry. In one embodiment, the fields are further subdivided, for example, software communication is subdivided into pure software, software-hardware combination, communication, and so on. The level demand refers to the professional level demand for the attorney, and the professional level are pre-divided into a plurality of professional grades reflecting the professional level of the attorney. The major demand refers to the major of the attorney, for example, the major is classified into optoelectronic communication, electromechanical automation and so on. The agency refers to the agency where the attorney works. The attorney demand is classified into two types, one is a clear demand, i.e., specifying an agency, and the other is a fuzzy demand, which only requires specifying conditions to be met by the attorney.

In one embodiment, the obtaining the attorney demand information of the client includes: obtaining an attorney demand content input by the client, semantically analyzing the attorney demand content, and extracting semantic information of the attorney demand content; and determining the attorney demand information of the client based on the semantic information, where the attorney demand information includes at least one of a field demand, a professional level demand, a major demand, and a time limit demand.

The attorney demand content is input by the client according to the demand, and an input manner may be voice input or manual input. For example, the client inputs by voice "I need an attorney in the field of electricity, and request to return the drafted application document within 15 days". By semantically analyzing the input content, the attorney demand information of the client is extracted as 'electrical field' and ' 15 days' time limit'.

In one embodiment, the semantically analyzing the attorney demand content, and extracting semantic information of the attorney demand content includes: taking the attorney demand content as an input to a semantic analysis model, and extracting semantic information from the attorney demand content using the semantic analysis model, where the semantic information includes a semantic relation and a semantic content.

The semantic information is often used to represent intent information of an intent of the user. In a specific embodiment, the intent information is presented in the form of a triad, a combination of triads, an intent triad, or a combination of intent triads. In one embodiment, the semantic information includes a triad or a combination of triads. The triad refers to structural data in the form of (x, y, z) to identify x, y, z, and their corresponding relationships. In this embodiment, the triad consists of a syntactic/semantic relation and two concepts, entities, words or phrases. The intent triad is a user intent stored in the form of the triad and a small unit for identifying a complete intent, which may be identified as (subject, relation, object), where subject denotes a first entity, relation denotes a relationship between subject and object, and object denotes a second entity. As an example, for "I need electrical attorneys", the triad is used as (I, need, electrical attorney).

The training of semantic analysis model often requires construction of a large amount of data, and the construction of the training data of the semantic analysis model has its own particularity due to the application scenario of semantic analysis model in this method is particular. Based on the particularity of this application scenario, a method for quickly constructing a training dataset of the semantic analysis model is proposed, including: determining candidate keywords of the field demand, candidate keywords of the professional level demand, candidate keywords of the major demand, and candidate keywords of the time limit demand; automatically generating a training utterance containing the candidate keywords of the field demand based on a predetermined template according to the candidate keywords of the field demand, and using the candidate keywords of the field demand as semantic labels of the training utterance; automatically generating a training utterance containing the candidate keywords of the professional level demand based on the predetermined template according to the candidate keywords of the professional level demand, and using the candidate keywords of the professional level demand as semantic labels of the training utterance; automatically generating a training utterance containing the candidate keywords of the major demand based on the predetermined template according to the candidate keywords of the major demand, and using the candidate keywords as semantic labels of the training utterance; and automatically generating a training utterance containing the candidate keywords of the time limit demand based on the predetermined template according to the candidate keywords of the time limit demand, and using the candidate keywords as semantic labels of the training utterance.

Through the above method, the purpose of quickly constructing the training dataset is realized, which is conducive to improving the speed of model training, and greatly reducing the cost at the same time.

In one embodiment, the attorney information includes professional level information, field information, major information and time limit information, and the matching the attorney demand information, the historical evaluation information and the historical application information with the attorney information in the database to generate the attorney list that is matched includes: screening out candidate attorneys matching the attorney demand information from the attorney information based on the attorney demand information; calculating a matching degree of each of the candidate attorneys based on the attorney demand information, the historical evaluation information and the historical application information; and generating the attorney list based on the matching degree, where the information of the plurality of attorneys in the attorney list is arranged in order of the matching degree.

The information included in the attorney demand information is relatively accurate demand information, so the attorneys matching the attorney demand information are screened out as the candidate attorneys based on the attorney demand information. For example, when the attorney demand information contains the professional level of the attorney, then attorneys matching the professional level are screened out as the candidate attorneys, which is conducive to reducing calculation workload of subsequent matching. After obtaining the candidate attorneys, it is required to carry out further matching by calculating a composite matching degree based on the attorney demand information, historical evaluation information and historical application information to obtain the matching degree with each candidate attorney. Sorting according to the level of matching is beneficial for the client to prioritize attorneys with high matching degrees. In the above process, the candidate attorneys are first screened based on the attorney demand information, and then the matching degree of each candidate attorney is calculated, which is conducive to reducing the calculation workload of the matching and greatly improving the matching efficiency.

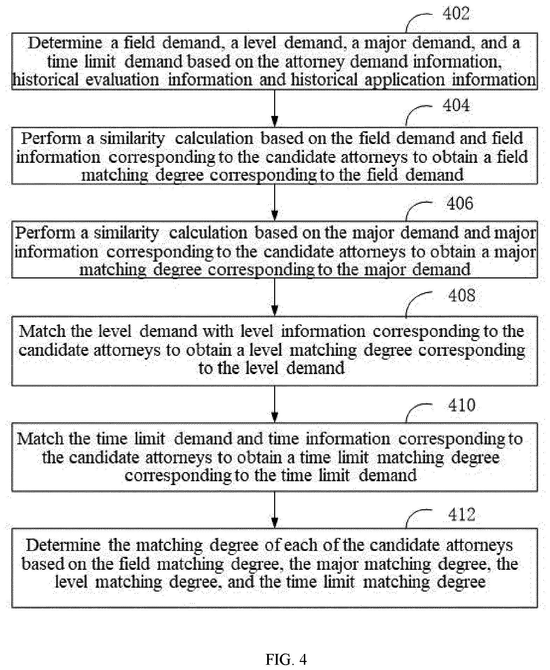

As shown in FIG. 4, in one embodiment, the calculating the matching degree of each of the candidate attorneys based on the attorney demand information, the historical evaluation information and the historical application information includes the following steps.

Step 402, determining a field demand, a level demand, a major demand, and a time limit demand based on the attorney demand information, the historical evaluation information, and the historical application information.

If the attorney demand information contains demand information that is comprehensive, for example, including the field demand, agency demand and major demand, then such information is able to be determined based on the attorney demand information. If the attorney demand information does not contain so much information, it is required to analyze the historical application information and historical evaluation information to obtain the missing information. Assuming that there is no major demand in the attorney demand information, the major demand information of the client is able to be obtained by analyzing the technical fields in the historical application information.

The level demand is able to be empty, i.e., the user is able to not limit the level. Similarly, the major demand is able to be empty, and the time limit demand is able to be empty, i.e., the user is able to not limit the major and time limit. However, the field demand cannot be empty, types of cases suitable for the attorneys in different fields are different, so the field demand cannot be empty in order to match the client with a field suitable for the case.

Step 404, performing a similarity calculation based on the field demand and field information corresponding to the candidate attorneys to obtain a field matching degree corresponding to the field demand.

The field matching degree is calculated by using the field similarity, and in one embodiment, the field matching degree is calculated by using the following formula, where the field demand is represented in the form of a vector, and similarly, the field information of the attorney is represented in the form of a vector.

$$D = \frac{\sum_{i=1}^{n} x_i y_i}{\sqrt{\sum_{i=1}^{n} x_i^2} \sqrt{\sum_{i=1}^{n} y_i^2}}$$

where $D$ denotes the field similarity, $x_i$ denotes an $i^{th}$ eigenvalue in a field demand vector, and $y_i$ denotes an $i^{th}$ eigenvalue in a field information vector.

Step 406, performing a similarity calculation based on the major demand and major information corresponding to the candidate attorneys to obtain a major matching degree corresponding to the major demand.

The major matching degree is calculated by means of major similarity, and in one embodiment, it is calculated by using the following formula:

$$d = \sqrt{\sum_{i=1}^{n} (x_i - y_i)^2}$$

where $d$ denotes the major similarity, $x_i$ denotes an $i^{th}$ eigenvalue in a major demand vector, and $y_i$ denotes an $i^{th}$ eigenvalue in a major information vector.

Step 408, matching the level demand with level information corresponding to the candidate attorneys to obtain a level matching degree corresponding to the level demand.

A matching rule for levels may be set in advance, for example, matching degrees of the same level are 100%. The matching of levels is performed with respect to higher levels not lower levels, for example, if the level required by the client is level two, then the matching degrees of levels lower than level two are set to 0. The matching degrees of levels higher than level two may be gradually reduced, for example, the matching degree between level three and level two is 80%, and the matching degree between level four and level two is 60%, and so on.

Step 410, matching the time limit demand and time information corresponding to the candidate attorneys to obtain a time limit matching degree corresponding to the time limit demand.

A rule for the matching degree between the time limits is able to be set according to the needs, and a matching principle is matching with respect to lower time limits not higher time limits. For example, if the time limit required by the client is 10 days for returning the drafted application document, then the time limit information is able to be returning the drafted application document within less than 10 days, and if it is more than 10 days, the corresponding matching degree is set to 0.

Step 412, determining the matching degree of each of the candidate attorneys based on the field matching degree, the major matching degree, the level matching degree, and the time limit matching degree.

After the field matching degree, the major matching degree, the level matching degree, and the time limit matching degree are known, it is possible to synthesize the plurality of matching degrees to obtain a composite matching degree, and the composite matching degree is taken as the matching degree of the candidate attorney. The combination of multiple factors for matching facilitates the provision of a more suitable attorney for the client.

In one embodiment, the determining the matching degree of each of the candidate attorneys based on the field matching degree, the major matching degree, the level matching degree, and the time limit matching degree includes: obtaining bias information of the client from the attorney demand information and the historical evaluation information, where the bias information includes bias degrees of the client for the field demand, the major demand, the level demand, and the time limit demand; using the bias information as an input to a weight analysis model to obtain a field weight corresponding to the field matching degree, a major weight corresponding to the major matching degree, a level weight corresponding to the level demand, and a time limit weight corresponding to the time limit demand as output from the weight analysis model; and calculating the matching degree of each of the candidate attorneys based on the field matching degree, the field weight, the major matching degree, the major weight, the level demand, the level weight, the time limit demand, and the time limit weight.

Different clients have different biases for each factor, so the weights of each factor need to be determined based on the bias information of the client using the weight analysis model in order to match a more suitable attorney. The weighted summation is then used to calculate the matching degree of each candidate attorney.

In order to quickly recommend a matched patent attorney for the client, an attorney information base and a client information base are pre-established in the information processing platform, so that when the client needs to be recommended with an attorney, the historical application information is obtained directly from the client information base after obtaining the attorney demand information.

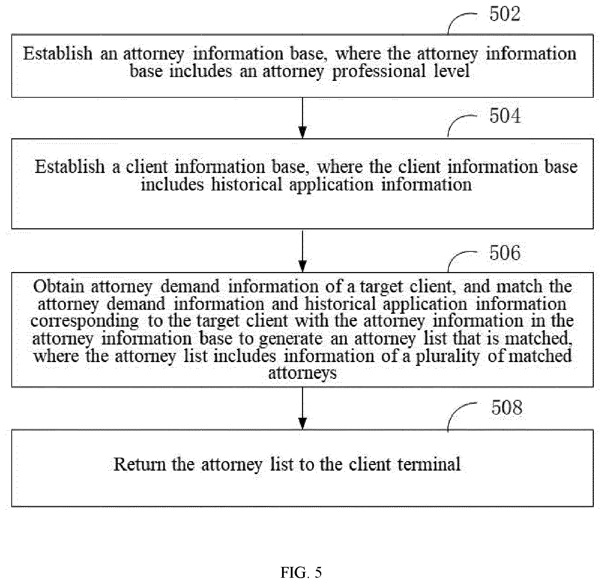

As shown in FIG. 5, in one embodiment, an information interaction method, applied at the information processing platform, includes the following steps.

Step 502, establishing an attorney information base, where the attorney information base includes an attorney professional level.

Personal introduction information of the attorney is stored in the attorney information base, and the personal introduction information of the attorney includes the attorney professional level. In addition, the personal introduction information of the attorney further includes main applicants that are historically represented and main technical fields that are historically represented. The personal introduction information of the attorney is obtained by the method for processing information based on data interaction described above.

Step 504, establishing a client information base, where the client information base includes historical application information.

Information of a plurality of clients is stored in the client information base, and information of each client includes the historical application information. The historical application information refers to information obtained by analyzing data of historically filed patent cases of the client, which includes at least one of technical fields of historically filed patent cases, historically cooperating agencies, and historically cooperating attorneys.

In one embodiment, the client information base further includes historical evaluation information. The historical evaluation information refers to the client's evaluation of the historically cooperating attorneys, which includes evaluation of professionalism and evaluation of service attitude, etc.

The matching the attorney demand information and historical application information corresponding to the target client with the attorney information in the attorney information base to generate an attorney list that is matched includes: matching the attorney demand information, the historical application information and the historical evaluation information corresponding to the target client with the attorney information in the attorney information base to generate the attorney list that is matched. That is, the attorney demand information, the historical application information and the historical evaluation information are simultaneously matched with the attorney information to obtain the attorney list.

Step 506, obtaining attorney demand information of a target client, and matching the attorney demand information and historical application information corresponding to the target client with the attorney information in the attorney information base to generate an attorney list that is matched, where the attorney list includes information of a plurality of matched attorneys.

The attorney demand information refers to more precise demand information input by the client, and the attorney demand information includes one or more of a professional level requirement for the attorney, a major requirement for the attorney, a practice year requirement for the attorney, a time limit requirement for completing the case, etc. The attorney demand information and the historical application information are combined and then matched with the attorney information in the database to generate the attorney list. The attorneys in the attorney list are sorted from high to by the matching degree, thereby facilitating subsequent selection of the clients.

In one embodiment, the method further includes obtaining the historical evaluation information of the target client, and matching the attorney demand information, the historical application information and the historical evaluation information corresponding to the target client with the attorney information in the attorney information base to generate an attorney list that is matched.

Step 508, returning the attorney list to the client terminal.

The attorney list is returned to the client terminal, and the client selects the attorney based on the attorney list, thereby greatly improving the accuracy of the selection.

In the above information interaction method, the attorney information base and the client information base are pre-established in the information processing platform, so that when the client needs to be recommended with an attorney, the historical application information and the historical evaluation information are obtained directly from the client information base after obtaining the attorney demand information. Then, three aspects of the attorney demand information, the historical application information, and the historical evaluation information are matched with the attorney information in the attorney information base to obtain the list of matched attorneys, and then the list of matched attorneys is returned to the client terminal as a recommendation result. As the attorney information base and the client information base have been established in advance, the information interaction method realizes quick and accurate recommendation of the matched patent attorneys for the clients.

In one embodiment, the information interaction method further includes: receiving an intent attorney selected from the attorney list from the client terminal, sending an intent request of the target client to an intent attorney terminal, and receiving an intent result sent by the intent attorney terminal; establishing an instant communication connection channel between the client terminal and the intent attorney terminal in response to the intent result being consent, where the instant communication connection channel is configured for case communication between the target client and the intent attorney; saving a previous case communication process between the target client and the intent attorney as a case communication process file, where the case communication process file is stored in association with a corresponding patent case.

When the attorney list is pushed to the client terminal, the client selects the intend attorney from the attorney list. Because of the two-way selection on the information processing platform, it is further required to send the intent request to the intend attorney terminal to confirm, and the instant communication connection channel between the client terminal and the attorney terminal is established only after the intend attorney agrees with the entrusting. The client carries out the case communication with the attorney through the instant communication connection channel, and the communication process file is saved for subsequent reviewing in case of any disagreement as well as for the attorney to repeatedly review the communication process file to understand the case. The communication process files are associated with the corresponding patents and saved, which is convenient for subsequent reviewing of communication records corresponding to the cases in the future, without searching for them from a large amount of information.

At present, the information of all instant communication tools is stored uniformly. When it is required to view a time point or a certain event, it needs to be found from numerous historical chat records, which is inefficient. In contrast, this innovative method in which case communication process files are stored in association with corresponding patent cases provides quick reviewing of the communication process of each case.

In one embodiment, the information interaction method further includes encrypting and storing the case communication process file to ensure the security of the client information.

In one embodiment, the method further includes establishing a client case information base, including: capturing published patent case information corresponding to information of the plurality of clients from a third-party database by interacting with the third-party database, where the published patent case information includes a case examination status; obtaining to-be-processed patent case information corresponding to information of the plurality of clients, where the to-be-processed patent case information includes a case processing status; and storing the published patent case information and the to-be-processed case information corresponding to the same client in a client case information base corresponding to the same client, where one client corresponds to one client case information base.

In order to facilitate the clients' management and viewing of their own cases, the client case information base is established for each client in the information processing platform, and the data of the published patent cases is captured from the third-party database and stored in the client case information base. In addition, the to-be-processed patent case information corresponding to the clients is added to the client case information base, so that the clients are able to quickly view the status of all the cases by logging into the information processing platform. In this way, the clients are able to directly manage the cases through the information processing platform, so as to more quickly and accurately understand the status of each case. Compared to a method in which the client could only inquire with the agency to find out the status of the case, this method is undoubtedly faster and more accurate.

In one embodiment, the method further includes: receiving a request for viewing cases sent by the client terminal, obtaining privilege information corresponding to the target client in response to the request, and obtaining patent case information corresponding to the privilege information from the client case information base to return to the client terminal for display.

After logging into the information processing platform, the client terminal sends the request to view the case. There are many ways to trigger the request to view the case, for example, directly clicking a button of case query.

Permissions corresponding to different clients are different, some clients' permissions are able to view all case information, while some clients' permissions are only able to view their corresponding cases. For example, for the same company, there are managers and ordinary employees, the managers' permissions are able to view all the cases of the ordinary employees, while the ordinary employees are only able to view their own cases. The setting of permissions is conducive to confidentiality of information. In the above process, the corresponding permission of the client is first determined after obtaining the case request, and then the patent case information corresponding to the permission information is returned to the client terminal for display. This method greatly improves the flexibility of case query and facilitates information security by setting the permission information during the query process.

In one embodiment, the published patent case information further includes a process document for patent examination, and the process document includes at least one of a notification of receipt, a notification of correction, a notification of examination opinions, and a response document for examination. The to-be-processed patent case information includes a process document for patent processing, and the process document for patent processing includes at least one of technical disclosure, a case communication process document, a case drafting document.

The published patent case information further includes the process document generated in the process of patent examination. The process document includes at least one of the notification of receipt, the notification of correction, the notification of examination opinions, and the response document for examination. Specifically, the information processing platform is able to directly receive the examination process documents (notification of receipt, notification of correction, notification of examination opinions) issued by the official, and then store the received examination process documents in association with the corresponding cases. In this way, the client is able to query all the relevant documents in the information processing platform, which is convenient and quick.

In one embodiment, establishing the attorney information base includes: obtaining basic information of an attorney, where the basic information includes an attorney name and a practice experience, and the practice experience includes an agency name corresponding to the attorney during practicing; establishing the connection with the third-party database, where the third-party database stores the patent case information, and the patent case information includes agency names and attorney names; extracting data of all patent cases corresponding to the attorney from the third-party database based on the attorney name and the practice experience; processing the data of all the patent cases corresponding to the attorney using an established patent case data processing model to statistically determine a historical grant rate of the attorney; extracting a predetermined number of to-be-evaluated patent cases within a predetermined number of years from the data of all the patent cases corresponding to the attorney; performing a technical analysis of the to-be-evaluated patent cases to determine technical fields to which the to-be-evaluated patent cases belong; sending the to-be-evaluated patent cases to experts corresponding to the technical fields based on the technical fields for evaluating, and receiving returned evaluation results; obtaining historical service evaluation information corresponding to the attorney; determining a professional level of the attorney based on a predetermined algorithm according to the historical grant rate of the attorney, the evaluation results and the historical service evaluation information; analyzing and processing data of all patent cases corresponding to the attorney to statistically obtain main applicants historically represented by the attorney and main technical fields historically represented by the attorney; generating personal introduction information corresponding to the attorney according to the professional level of the attorney, the main applicants historically represented by the attorney and the main technical fields historically represented by the attorney based on a predetermined template; storing the personal introduction information corresponding to the attorney in the attorney information base.

In one embodiment, the establishing the client information base includes: obtaining basic information of a client, where the basic information includes applicant information; establishing a connection with a third-party database, where the third-party database stores patent case information; capturing data of all patent cases corresponding to the applicant information from the third-party database based on the applicant information; analyzing the data of all the patent cases corresponding to the applicant information using a predetermined patent analysis model to obtain historical application information corresponding to the applicant information, where the historical application information includes technical fields of historically filed patent cases, historically cooperating agencies, and historically cooperating attorneys; and storing the historical application information corresponding to the client in the client information base.

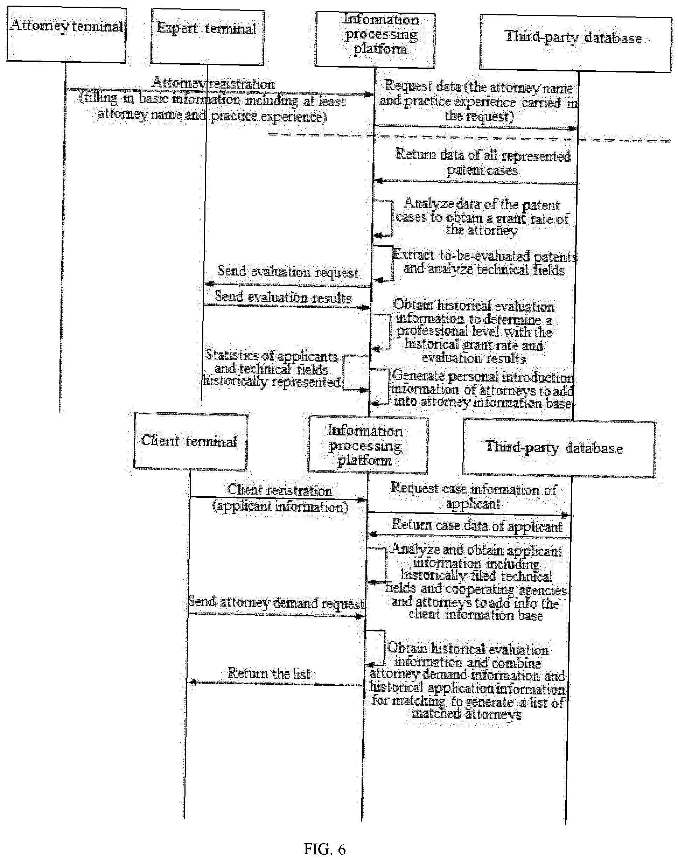

FIG. 6 shows a timing diagram of information interaction including two parts. A first part is a timing diagram for generating personal introduction information of the attorney, and a second part is a timing diagram for attorney recommendation.

In the first part, the attorney first registers through the attorney terminal, and the registration process requires filling in the basic information of the attorney, including the attorney name and the practice experience. After receiving the basic information of the attorney, the information processing platform sends a data request to the third-party database (carrying the attorney name and the practice experience) and receives the data of the patent cases returned by the third-party database. Then the information processing platform analyzes the data of the patent cases and obtains the historical grant rate statistically. In addition, the information processing platform extracts a predetermined number of to-be-evaluated patent cases within a predetermined number of years from the data of the patent cases and carries out a technical analysis to determine the technical fields to which the to-be-evaluated patent cases belong. After that, the information processing platform sends the to-be-evaluated patent cases to the corresponding experts for the evaluation and receives the evaluation results returned. In addition, the information processing platform obtains the historical service evaluation information corresponding to the attorney from its own database, and determines the professional level of the attorney based on the historical grant rate, evaluation results and historical service evaluation information of the attorney. Furthermore, the information processing platform analyzes and processes the data of all the patent cases corresponding to the attorney to statistically obtain the applicants historically represented by the attorney and the technical fields historically represented by the attorney. Finally, the information processing platform generates the personal introduction information corresponding to the attorney based on the predetermined template according to the professional level of the attorney, the main applicants historically represented by the attorney and the main technical fields historically represented by the attorney, and stores the generated personal introduction information in the attorney information base.

In the second part, the client registers on the information processing platform through the client terminal, and fills in the basic information of the client (including at least the applicant information) when registering. The information processing platform captures the data of the patent cases from the third-party database according to the applicant information, analyzes the data of all the patent cases corresponding to the applicant information by using the predetermined patent analysis model to obtain the applicant information. The historical application information includes the technical fields of historically filed patent cases, the historically cooperating agencies, and the historically cooperating attorneys, which is added to the client information base. In addition, the information processing platform also obtains the attorney demand information sent by the client terminal, obtains the historical evaluation information of the client from its own database, and finally matches the attorney demand information, the historical evaluation information and the historical application information with the attorney information in the database to generate the attorney list that is matched. The attorney list includes information of a plurality of matched attorneys. The information processing platform returns the generated attorney list to the client terminal. The client terminal selects the intend attorney, and then the information processing platform sends it to the attorney terminal for confirmation, and the attorney agrees to reach an agreement with the client.

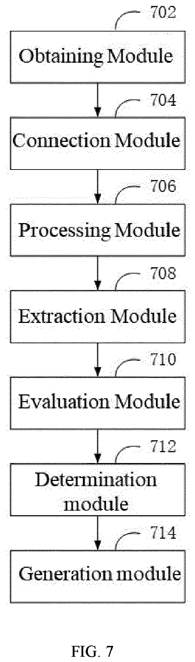

As shown in FIG. 7, an apparatus for processing information based on data interaction is provided, including the following modules: an obtaining module 702 for obtaining basic information of an attorney, the basic information including attorney identification information; a connection module 704 for establishing a connection with a third-party database storing patent case information, the patent case information including the attorney identification information; a processing module 706 for processing data of all patent cases corresponding to the attorney using an established patent case data processing model, and statistically determining a historical grant rate of the attorney within a predetermined time; an extraction module 708 for extracting a predetermined number of to-be-evaluated patent cases within a predetermined number of years from the data of all the patent cases corresponding to the attorney; an evaluation module 710 for sending the to-be-evaluated patent cases to experts in corresponding technical fields for evaluation and receiving returned evaluation results; a determination module 712 for determining a professional level of the attorney based on a predetermined algorithm according to the historical grant rate of the attorney and the evaluation results; and a generation module 714 for generating personal introduction information corresponding to the attorney according to the professional level of the attorney based on a predetermined template.

In one embodiment, the apparatus further includes an extraction module for extracting the data of all the patent cases corresponding to the attorney from the third-party database based on an attorney name and a practice experience.

In one embodiment, the basic information includes a professional representing direction, and the extraction module 708 is further configured to screen out data of candidate patent cases matching the professional representing direction from the data of all the patent cases corresponding to the attorney and extract the to-be-evaluated patent cases from the data of the candidate patent cases.

In one embodiment, the processing module 706 is further configured to: extract a legal status from the data of all the patent cases using the established patent case data processing model, where the legal status includes one of grant, refusal, pending, and withdrawal, and the patent case data processing model is configured to determine a regular expression corresponding to the legal status and extract the legal status of each case based on the regular expression; count a number of granted cases whose legal statuses are grant, a number of refused cases whose legal statuses are refusal, and a number of withdrawn cases whose legal statuses are withdrawal; and calculate the historical grant rate based on the number of granted cases, the number of refused cases, and the number of withdrawn cases.

In one embodiment, the processing module 706 is further configured to: count a number of granted cases, a number of refused cases, and a number of withdrawn cases in a predetermined number of closed cases nearest to a current time; and calculate a latest the historical grant rate based on the number of granted cases, the number of refused cases, and the number of withdrawn cases in the predetermined number of closed cases nearest to the current time.

In one embodiment, the processing module 706 is further configured to: screen out candidate patent cases whose filing dates are within a predetermined time period; count the number of granted cases whose legal statuses are grant, the number of refused cases whose legal statuses are refusal, and the number of withdrawn cases whose legal statuses are withdrawal; and calculate a historical grant rate corresponding to the predetermined time period based on the number of granted cases whose legal statuses are grant, the number of refused cases whose legal statuses are refusal, and the number of withdrawn cases whose legal statuses are withdrawal in the candidate patent cases.

In one embodiment, the determining module 712 is further configured to: obtain a number of practice years and a total number of historically filed cases of the attorney, take the number of practice years and the total number of historically filed cases as inputs to a weight determination model, where the weight determination model is obtained by training and learning using a deep neural network model; obtain a first weight of the historical grant rate , a second weight of the evaluation results, and a third weight of the historical service evaluation information corresponding to the attorney that are output from the weight determination model; and determine a professional level of the attorney based on the historical grant rate, the first weight, the evaluation results, the second weight, the historical service evaluation information, and the third weight.

In one embodiment, the extraction module is further configured to: determine a target search condition based on the attorney name and the practice experience, where the target search condition includes the attorney name, a name of an agency for practice, and a practice time corresponding to the agency; and extract the data of all the patent cases corresponding to the attorney from the third-party database based on the target search condition.

In one embodiment, the apparatus further includes an analysis module for analyzing and processing the data of all the patent cases corresponding to the attorney, and statistically obtaining the applicants historically represented by the attorney and the technical fields historically represented by the attorney.

The analysis module is further configured to: capture classification number information and abstract information of each patent case, and analyze the abstract information to extract a technical keyword; and use the classification number information and the technical keyword as inputs to a technical field classification model to determine a technical field category corresponding to the patent case, and use the technical field category as a technical field label of the patent case.

In one embodiment, the technical field classification model includes: a first feature model, a second feature model, and a classification model. The first feature model is configured to determine a first feature vector corresponding to a classification number based on the classification number, a second feature model is configured to determine a second feature vector corresponding to the technical keyword, and the classification model is configured to determine the technical field category corresponding to the patent case based on the first feature vector and the second feature vector.

In one embodiment, the basic information further includes an attorney qualification certificate number, and the apparatus further includes a verification module configured to: obtain an official practice experience of the attorney based on the attorney qualification certificate number; verify the basic information of the attorney based on the official practice experience; notify the connection module to establish the connection with the third-party database in response to successful verification; and return a result of unsuccessful verification in response to the unsuccessful verification.

In one embodiment, a statistical module is configured to: extract applicant information in each case to count a number of cases corresponding to the same applicant information; determine main applicants according to the number of cases corresponding to each applicant information, where the main applicants have top-ranked number of cases; obtain the technical classification number and the technical keyword of each case to determine a technical field corresponding to each case according to the technical classification number and the technical keyword; and count a number of cases corresponding to the same technical field to determine main technical fields based on the number of cases corresponding to the same technical field.

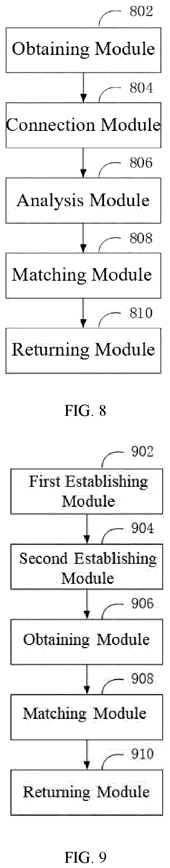

As shown in FIG. 8, an apparatus for information recommendation based on data interaction is provided, including: an obtaining module 802 for obtaining basic information of a client, where the basic information of the client includes applicant information; a connection module 804 for establishing a connection with a third-party database, where the third-party database stores patent case information; an analysis module 806 for analyzing data of all patent cases corresponding to the applicant information using a predetermined patent analysis model to obtain historical application information corresponding to the applicant information, where the historical application information includes technical fields of historically filed patent cases, historically cooperating agencies, and attorneys; the obtaining module is further configured for obtaining attorney demand information of the client; a matching module 808 for matching the attorney demand information and the historical application information with attorney information in a database to generate an attorney list that is matched, where the attorney list includes information of a plurality of attorneys that are matched; and a returning module 810 for returning the attorney list to a client terminal.

In one embodiment, the apparatus further includes a capturing module for capturing the data of all the patent cases corresponding to the applicant information from the third-party database based on the applicant information.

In one embodiment, the analysis module is further configured to: extract a technical classification number, a technical keyword, a name of an agency and an attorney corresponding to each of the patent cases using the predetermined patent analysis model; determine a technical field corresponding to each of the patent cases based on the technical classification number and the technical keyword; extract the agency corresponding to each of the patent cases, count a first number of cases historically represented by each agency, and sort historically cooperating agencies according to the first number of cases; and extract the attorney corresponding to each of the patent cases, count a second number of cases represented by each attorney, and sort the historically cooperating attorneys according to the second number of cases.

In one embodiment, the obtaining module is further configured to: obtain an attorney demand content input by the client, semantically analyze the attorney demand content, and extract semantic information of the attorney demand content; and determine the attorney demand information of the client based on the semantic information, where the attorney demand information includes at least one of a field demand, a professional level demand, a major demand, and a time limit demand.

In one embodiment, the attorney information includes professional level information, field information, major information and time limit information, and the matching module is further configured to: screen out candidate attorneys matching the attorney demand information from the attorney information based on the attorney demand information; calculate a matching degree of each of the candidate attorneys based on the attorney demand information, the historical evaluation information and the historical application information; and generate the attorney list based on the matching degree, where the information of the plurality of attorneys in the attorney list is arranged in order of the matching degree .

In one embodiment, the matching module is further configured to: determine a field demand, a level demand, a major demand, and a time limit demand based on the attorney demand information, the historical evaluation information, and the historical application information; perform a similarity calculation based on the field demand and field information corresponding to the candidate attorneys to obtain a field matching degree corresponding to the field demand; perform a similarity calculation based on the major demand and major information corresponding to the candidate attorneys to obtain a major matching degree corresponding to the major demand; match the level demand with level information corresponding to the candidate attorneys to obtain a level matching degree corresponding to the level demand; match the time limit demand and time information corresponding to the candidate attorneys to obtain a time limit matching degree corresponding to the time limit demand; and determine the matching degree of each of the candidate attorneys based on the field matching degree, the major matching degree, the level matching degree, and the time limit matching degree.

In one embodiment, the matching module is further configured to: obtain bias information of the client from the attorney demand information and the historical evaluation information, where the bias information includes bias degrees of the client for the field demand, the major demand, the level demand, and the time limit demand; use the bias information as an input to a weight analysis model to obtain a field weight corresponding to the field matching degree, a major weight corresponding to the major matching degree, a level weight corresponding to the level demand, and a time limit weight corresponding to the time limit demand as output from the weight analysis model; and calculate the matching degree of each of the candidate attorneys based on the field matching degree, the field weight, the major matching degree, the major weight, the level demand, the level weight, the time limit demand, and the time limit weight.

In one embodiment, the attorney information includes level information, and the level information is determined by: obtaining basic information of an attorney, where the basic information of the attorney includes an attorney name and a practice experience, and the practice experience includes an agency name corresponding to the attorney during practicing; establishing the connection with the third-party database, where the third-party database stores the patent case information, and the patent case information includes agency names and attorney names; extracting data of all patent cases corresponding to the attorney from the third-party database based on the attorney name and the practice experience; processing the data of all the patent cases corresponding to the attorney using an established patent case data processing model to statistically determine a historical grant rate of the attorney; extracting a predetermined number of to-be-evaluated patent cases within a predetermined number of years from the data of all the patent cases corresponding to the attorney; performing a technical analysis of the to-be-evaluated patent cases to determine technical fields to which the to-be-evaluated patent cases belong; sending the to-be-evaluated patent cases to experts corresponding to the technical fields based on the technical fields for evaluating, and receiving returned evaluation results; obtaining historical service evaluation information corresponding to the attorney; and determining a professional level of the attorney based on a predetermined algorithm according to the historical grant rate of the attorney, the evaluation results and the historical service evaluation information.

In one embodiment, the apparatus for information recommendation based on data interaction further includes a communication establishment module configured to: receive an intent attorney selected from the attorney list from the client terminal, and send an intent request of the client to an intent attorney terminal; and receive an intent result sent by the intent attorney terminal, and establish an instant communication connection channel between the client terminal and the intent attorney terminal in response to the intent result being consent, where the instant communication connection channel is configured for case communication between the client and the intent attorney.

As shown in FIG. 9, an information interaction apparatus is provided, including: a first establishing module 902 for establishing an attorney information base, where the attorney information base includes information of a plurality of attorneys, and information of each of the plurality of attorneys includes an attorney professional level; a second establishing module 904 for establishing a client information base, where the client information base includes information of a plurality of clients, and information of each of the plurality of clients includes historical application information; an obtaining module 906 for obtaining attorney demand information of a target client; a matching module 908 for matching the attorney demand information and historical application information corresponding to the target client with the attorney information in the attorney information base to generate an attorney list that is matched, where the attorney list includes information of a plurality of matched attorneys; and a returning module 910 for returning the attorney list to a client terminal.

In one embodiment, the information interaction apparatus further includes: a receiving module for receiving an intent attorney selected from the attorney list from the client terminal, sending an intent request of the target client to an intent attorney terminal, and receiving an intent result sent by the intent attorney terminal; a communication establishment module for establishing an instant communication connection channel between the client terminal and the intent attorney terminal in response to the intent result being consent, where the instant communication connection channel is configured for case communication between the target client and the intent attorney; and a saving module for saving a previous case communication process between the target client and the intent attorney as a case communication process file, where the case communication process file is stored in association with a corresponding patent case.

In one embodiment, the first establishing module is further configured to: capture published patent case information corresponding to information of the plurality of clients from a third-party database by interacting with the third-party database, where the published patent case information includes a case examination status; obtain to-be-processed patent case information corresponding to information of the plurality of clients, where the to-be-processed patent case information includes a case processing status; and store the published patent case information and the to-be-processed case information corresponding to the same client in a client case information base corresponding to the same client, where one client corresponds to one client case information base.

In one embodiment, the information interaction apparatus further includes: a searching module configured to receive a request for viewing cases sent by the client terminal, obtain privilege information corresponding to the target client in response to the request, and obtain patent case information corresponding to the privilege information from the client case information base to return to the client terminal for display.

In one embodiment, the published patent case information further includes a process document for patent examination, and the process document includes at least one of a notification of receipt, a notification of correction, a notification of examination opinions, and a response document for examination. The to-be-processed patent case information includes a process document for patent processing, and the process document for patent processing includes at least one of technical disclosure, a case communication process document, a case drafting document.

In one embodiment, the second establishing module is further configured to: obtain basic information of an attorney, where the basic information includes an attorney name and a practice experience, and the practice experience includes an agency name corresponding to the attorney during practicing; establish the connection with the third-party database, where the third-party database stores the patent case information, and the patent case information includes agency names and attorney names; extract data of all patent cases corresponding to the attorney from the third-party database based on the attorney name and the practice experience; process the data of all the patent cases corresponding to the attorney using an established patent case data processing model to statistically determine a historical grant rate of the attorney; extract a predetermined number of to-be-evaluated patent cases within a predetermined number of years from the data of all the patent cases corresponding to the attorney; perform a technical analysis of the to-be-evaluated patent cases to determine technical fields to which the to-be-evaluated patent cases belong; send the to-be-evaluated patent cases to experts corresponding to the technical fields based on the technical fields for evaluating, and receive returned evaluation results; obtain historical service evaluation information corresponding to the attorney; determine a professional level of the attorney based on a predetermined algorithm according to the historical grant rate of the attorney, the evaluation results and the historical service evaluation information; analyze and process data of all patent cases corresponding to the attorney to statistically obtain main applicants historically represented by the attorney and main technical fields historically represented by the attorney; generate personal introduction information corresponding to the attorney according to the professional level of the attorney, the main applicants historically represented by the attorney and the main technical fields historically represented by the attorney based on a predetermined template; store the personal introduction information corresponding to the attorney in the attorney information base.

In one embodiment, the apparatus further includes a third establishing module configured to: obtain basic information of a client, where the basic information includes applicant information; establish a connection with a third-party database, where the third-party database stores patent case information; capture data of all patent cases corresponding to the applicant information from the third-party database based on the applicant information; analyze the data of all the patent cases corresponding to the applicant information using a predetermined patent analysis model to obtain historical application information corresponding to the applicant information, where the historical application information includes technical fields of historically filed patent cases, historically cooperating agencies, and historically cooperating attorneys; and store the historical application information corresponding to the client in the client information base.

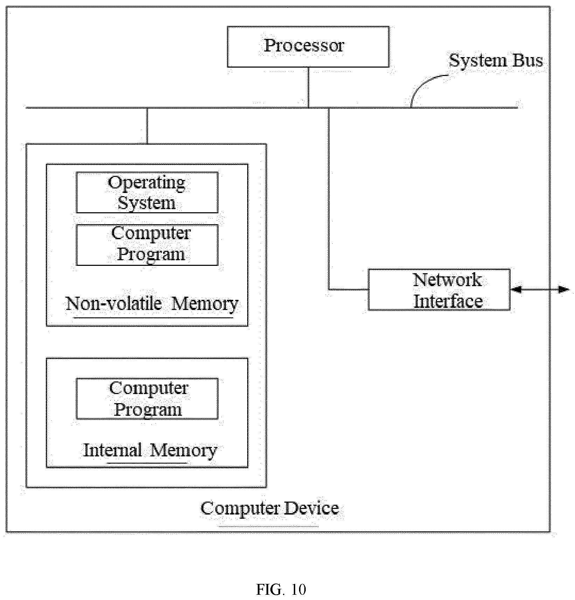

FIG. 10 is a block diagram of an internal structure of a computer device in an embodiment. The computer device may be a server, and the computer device includes a processor and a memory connected via a system bus. The memory includes a non-volatile storage medium and an internal memory. The non-volatile storage medium of the computer device stores an operating system and also a computer program which, when executed by the processor, causes the processor to implement the method for processing information based on data interaction, the method for information recommendation based on data interaction, or the method for information interaction as described above. The internal memory may also store a computer program which, when executed by the processor, causes the processor to implement the method for processing information based on data interaction, the method for information recommendation based on data interaction, or the method for information interaction as described above. It should be understood by those skilled in the art that the structure shown in FIG. 10 is only a block diagram of a portion of the structure related to the technical solutions of the present disclosure, which does not constitute a limitation on the computer device to which the technical solutions of the present disclosure is applied, and that a specific computer device may include more or fewer components than those shown in the drawings, may combine some of the components, or may have a different arrangement of the components.

A computer readable storage medium storing a computer program is provided, and the computer program when executed by a processor causes the processor to perform steps in the method for processing information based on data interaction, the method for information recommendation based on data interaction, or the method for information interaction as described above.

A computer device including a memory and a processor is provided, and the memory stores a computer program which when executed by the processor causes the processor to perform steps in the method for processing information based on data interaction, the method for information recommendation based on data interaction, or the method for information interaction as described above.

It should be noted that the method and apparatus for processing information based on data interaction, computer device, storage medium, the method and apparatus for information recommendation based on data interaction, computer device, storage medium, and the method and apparatus for information interaction, computer device, and storage medium as described above have the same or corresponding technical features, so the above corresponding embodiments may be applicable to each other.

A person of ordinary skill in the art may understand that all or part of the processes in the methods of the above embodiments can be accomplished by a computer program to instruct relevant hardware, and the program may be stored in a non-volatile computer-readable storage medium. The program when executed includes processes in the embodiments of each of the methods described above. Any reference to a memory, storage, database, or other medium used in the various embodiments provided in the present disclosure may include non-volatile and/or volatile memory. Non-volatile memory may include read-only memory (ROM), programmable ROM (PROM), electrically programmable ROM (EPROM), electrically erasable programmable ROM (EEPROM), or flash memory. The volatile memory may include random access memory (RAM) or external cache memory. By way of illustration and not limitation, RAM is available in a variety of forms, such as static RAM (SRAM), dynamic RAM (DRAM), synchronous DRAM (SDRAM), dual data rate SDRAM (DDRSDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM).

The technical features in the above embodiments can be combined in any way, and for the sake of conciseness, all possible combinations of the technical features in the above embodiments have not been described. However, as long as there is no contradiction in the combinations of the technical features, they should be considered to be within the scope of the present disclosure.

The above embodiments express only several embodiments of the present disclosure, which are described in a more specific and detailed manner, but are not to be construed as a limitation of the patent scope of the present disclosure. It should be noted that for a person of ordinary skill in the art, several deformations and improvements can be made without departing from the concepts of the present disclosure, which all fall within the protection scope of the present disclosure. Therefore, the protection scope of the present disclosure shall be subject to the appended claims.

**Claims**

1. A method for information interaction, applied at an information processing platform, comprising:

   establishing an attorney information base, wherein the attorney information base includes information of a plurality of attorneys, and information of each of the plurality of attorneys includes an attorney professional level;
   establishing a client information base, wherein the client information base includes information of a plurality of clients, and information of each of the plurality of clients includes historical application information;
   obtaining attorney demand information of a target client, and matching the attorney demand information and the historical application information corresponding to the target client with the information of the plurality of attorneys in the attorney information base to generate an attorney list that is matched, wherein the attorney list includes information of a plurality of matched attorneys; and
   returning the attorney list to a client terminal.

2. The method according to claim 1, wherein the historical application information includes technical fields of historically filed patent cases, historically cooperating agencies, and historically cooperating attorneys; and wherein

   the method further includes: obtaining historical evaluation information of the target client; and
   the matching the attorney demand information and the historical application information corresponding to the target client with the information of the plurality of attorneys in the attorney information base to generate the attorney list that is matched includes:

   matching the attorney demand information, the historical application information and the historical evaluation information corresponding to the target client with the information of the plurality of attorneys in the attorney information base to generate the attorney list that is matched.

3. The method according to claim 1, further comprising:

   receiving an intent attorney selected from the attorney list from the client terminal, and sending an intent request of the client to an intent attorney terminal;
   receiving an intent result sent by the intent attorney terminal;
   establishing an instant communication connection channel between the client terminal and the intent attorney terminal in response to the intent result being consent, wherein the instant communication connection channel is configured for case communication between the target client and the intent attorney; and
   saving a case communication process between the target client and the intent attorney as a case communication process file, wherein the case communication process file is stored in association with a patent case corresponding to the case communication process file.

4. The method according to claim 1, wherein the establishing the client information base includes:

   capturing published patent case information corresponding to the information of the plurality of clients from a third-party database by interacting with the third-party database, wherein the published patent case information includes a case examination status;
   obtaining to-be-processed patent case information corresponding to the information of the plurality of clients, wherein the to-be-processed patent case information includes a case processing status; and
   storing the published patent case information and the to-be-processed patent case information corresponding to a same client in the client case information base corresponding to the same client, wherein one client corresponds to one client case information base.

5. The method according to claim 4, further comprising: receiving a request for viewing cases sent by the client terminal, obtaining privilege information corresponding to the target client in response to the request, and obtaining patent case information corresponding to the privilege information from the client case information base to return to the client terminal for display.

6. The method according to claim 4, wherein:

the published patent case information further includes a process document for patent examination, and the process document includes at least one of a notification of receipt, a notification of correction, a notification of examination opinions; and a response document for examination; and

the to-be-processed patent case information includes a process document for patent processing, and the process document for patent processing includes at least one of technical disclosure, a case communication process document, a case drafting document.

7. The method according to claim 1, wherein the establishing the attorney information base includes:

obtaining basic information of an attorney, wherein the basic information includes attorney identification information;

establishing a connection with a third-party database storing patent case information, wherein the patent case information includes the attorney identification information;

processing data of all patent cases corresponding to the attorney using an established patent case data processing model, and statistically determining a historical grant rate of the attorney within a predetermined time;

extracting a predetermined number of to-be-evaluated patent cases within a predetermined number of years from the data of all the patent cases corresponding to the attorney;

sending the to-be-evaluated patent cases to experts in technical fields corresponding to the to-be-evaluated patent cases for evaluation, and receiving evaluation results that are returned;

determining a professional level of the attorney based on a predetermined algorithm according to the historical grant rate of the attorney and the evaluation results;

generating personal introduction information corresponding to the attorney according to the professional level of the attorney based on a predetermined template; and

storing the personal introduction information corresponding to the attorney in the attorney information base.

8. The method according to claim 1, wherein the establishing the client information base includes:

obtaining basic information of a client, wherein the basic information of the client includes applicant information;

establishing a connection with a third-party database, wherein the third-party database stores patent case information;

analyzing data of all patent cases corresponding to the applicant information using a predetermined patent analysis model to obtain historical application information corresponding to the applicant information; and

storing the historical application information corresponding to the client in the client information base.

9. An apparatus for information interaction, comprising:

a first establishing module for establishing an attorney information base, wherein the attorney information base includes information of a plurality of attorneys, and information of each of the plurality of attorneys includes an attorney professional level;

a second establishing module for establishing a client information base, wherein the client information base includes information of a plurality of clients, and information of each of the plurality of clients includes historical application information;

an obtaining module for obtaining attorney demand information of a target client;

a matching module for matching the attorney demand information and the historical application information corresponding to the target client with the information of the plurality of attorneys in the attorney information base to generate an attorney list that is matched, wherein the attorney list includes information of a plurality of matched attorneys; and

a returning module for returning the attorney list to a client terminal.

10. A computer readable storage medium storing a computer program, wherein the computer program when executed by a processor causes the processor to perform operations in the method for information interaction according to any one of claims 1 to 8.

11. A computer device comprising a memory and a processor, wherein the memory stores a computer program, and the computer program when executed by the processor causes the processor to perform operations in the method for information interaction according to any one of claims 1 to 8.

102

Obtain basic information of an attorney, the basic information including attorney identification information

104

Establish a connection with a third-party database storing patent case information, the patent case information including the attorney identification information

106

Process data of all patent cases corresponding to the attorney by an patent case data processing model and statistically determine a historical grant rate of the attorney within a predetermined time

108

Extract a predetermined number of to-be-evaluated patent cases within a predetermined number of years from the data of all the patent cases corresponding to the attorney

110

Send the to-be-evaluated patent cases to experts in corresponding technical fields for evaluation and receive returned evaluation results

112

Determine a professional level of the attorney based on a predetermined algorithm according to the historical grant rate of the attorney and the evaluation results

114

Generate personal introduction information corresponding to the attorney according to the professional level of the attorney based on a predetermined template

FIG. 1

202

Obtain a number of practice years and a total number of historically filed cases of the attorney, and take the number of practice years and the total number of historically filed cases as inputs to a weight determination model, where the weight determination model is obtained by training and learning using a deep neural network model

204

Obtain a first weight of the historical grant rate, a second weight of the evaluation results, and a third weight of the historical service evaluation information corresponding to the attorney that are output from the weight determination model

206

Determine a professional level of the attorney based on the historical grant rate, the first weight, the evaluation results, the second weight, the historical service evaluation information, and the third weight

FIG. 2

302

Obtain basic information of a client, where the basic information of the client includes applicant information

304

Establish a connection with a third-party database, where the third-party database stores patent case information

306

Analyze data of all patent cases corresponding to the applicant information using a predetermined patent analysis model to obtain historical application information corresponding to the applicant information

308

Obtain attorney demand information of the client

310

Match the attorney demand information and historical application information with attorney information in a database to generate an attorney list that is matched including information of a plurality of matched attorneys

312

Return the attorney list to a client terminal

FIG. 3

402

Determine a field demand, a level demand, a major demand, and a time limit demand based on the attorney demand information, historical evaluation information and historical application information

↓

404

Perform a similarity calculation based on the field demand and field information corresponding to the candidate attorneys to obtain a field matching degree corresponding to the field demand

↓

406

Perform a similarity calculation based on the major demand and major information corresponding to the candidate attorneys to obtain a major matching degree corresponding to the major demand

↓

408

Match the level demand with level information corresponding to the candidate attorneys to obtain a level matching degree corresponding to the level demand

↓

410

Match the time limit demand and time information corresponding to the candidate attorneys to obtain a time limit matching degree corresponding to the time limit demand

↓

412

Determine the matching degree of each of the candidate attorneys based on the field matching degree, the major matching degree, the level matching degree, and the time limit matching degree

FIG. 4

502

Establish an attorney information base, where the attorney information base includes an attorney professional level

504

Establish a client information base, where the client information base includes historical application information

506

Obtain attorney demand information of a target client, and match the attorney demand information and historical application information corresponding to the target client with the attorney information in the attorney information base to generate an attorney list that is matched, where the attorney list includes information of a plurality of matched attorneys

508

Return the attorney list to the client terminal

FIG. 5

FIG. 6

702

Obtaining Module

704

Connection Module

706

Processing Module

708

Extraction Module

710

Evaluation Module

712

Determination module

714

Generation module

FIG. 7

802

Obtaining Module

804

Connection Module

806

Analysis Module

808

Matching Module

810

Returning Module

FIG. 8

902

First Establishing Module

904

Second Establishing Module

906

Obtaining Module

908

Matching Module

910

Returning Module

FIG. 9

FIG. 10

**INTERNATIONAL SEARCH REPORT**

| International application No. |
|---|
| **PCT/CN2022/098945** |

| A. | CLASSIFICATION OF SUBJECT MATTER |
|---|---|

G06F 16/9535(2019.01)i;  G06F 16/906(2019.01)i;  G06Q 50/18(2012.01)i

According to International Patent Classification (IPC) or to both national classification and IPC

| B. | FIELDS SEARCHED |
|---|---|

Minimum documentation searched (classification system followed by classification symbols)

G06F G06Q

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 交互, 代理人, 信息库, 级别, 客户, 历史, 需求, 匹配, 列表, 推荐, interaction, agent, information library, level, customer, history, request, match, list, recommendation

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113704601 A (NOZO GROUP CO., LTD.) 26 November 2021 (2021-11-26) claims 1-11 | 1-11 |
| Y | CN 109389258 A (BEIJING HENGGUAN NETWORK DATA PROCESSING CO., LTD.) 26 February 2019 (2019-02-26) description, paragraphs [0064]-[0128] | 1-11 |
| Y | CN 110457357 A (CHINA PING AN PROPERTY INSURANCE CO., LTD.) 15 November 2019 (2019-11-15) description, paragraphs [0005]-[0023] | 1-11 |
| A | CN 108364243 A (SHENZHEN HEVEI BRAND MANAGEMENT CO., LTD.) 03 August 2018 (2018-08-03) entire document | 1-11 |
| A | CN 112396326 A (PING AN LIFE INSURANCE COMPANY OF CHINA, LTD.) 23 February 2021 (2021-02-23) entire document | 1-11 |
| A | US 2011060737 A1 (CARDELLA, J.) 10 March 2011 (2011-03-10) entire document | 1-11 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 August 2022** | **20 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document<br>cited in search report | | | Publication date<br>(day/month/year) | Patent family member(s) | | | Publication date<br>(day/month/year) |
|---|---|---|---|---|---|---|---|
| CN | 113704601 | A | 26 November 2021 | None | | | |
| CN | 109389258 | A | 26 February 2019 | None | | | |
| CN | 110457357 | A | 15 November 2019 | None | | | |
| CN | 108364243 | A | 03 August 2018 | None | | | |
| CN | 112396326 | A | 23 February 2021 | None | | | |
| US | 2011060737 | A1 | 10 March 2011 | US | 2011078138 | A1 | 31 March 2011 |

**INTERNATIONAL SEARCH REPORT**
**Information on patent family members**

International application No.

**PCT/CN2022/098945**

Form PCT/ISA/210 (patent family annex) (January 2015)